Europäisches Patentamt

European Patent Office

Office européen des brevets

(11) Veröffentlichungsnummer: **0 419 911 A2**

# (12) EUROPÄISCHE PATENTANMELDUNG

(21) Anmeldenummer: 90117242.9

(22) Anmeldetag: 07.09.90

(51) Int. Cl.⁵: **B29C 45/16**, B29C 45/54, B29C 45/50

Die Bezeichnung der Erfindung wurde geändert (Richtlinien für die Prüfung im EPA, A-III, 7.3).

(30) Priorität: 28.09.89 DE 3932416

(43) Veröffentlichungstag der Anmeldung:
03.04.91 Patentblatt 91/14

(84) Benannte Vertragsstaaten:
AT CH FR GB IT LI NL

(71) Anmelder: Klöckner Ferromatik Desma GmbH
Riegeler Strasse 4
W-7831 Malterdingen(DE)

(72) Erfinder: Thoma, Herbert, Dipl.-Ing.
Schwarzwaldstrasse 5
W-7832 Kenzingen(DE)
Erfinder: Jaroschek, Christoph, Dipl.-Ing.
In der Brunnenstrasse 17a
W-7832 Kenzingen-Bombach(DE)

(74) Vertreter: Röther, Peter, Dipl.-Phys.
Patentabteilung, Klöckner-Werke AG,
Klöcknerstrasse 29
W-4100 Duisburg 1(DE)

(54) Verfahren und Vorrichtung zum Spritzgiessen von Mehrkomponenten-Kunststoffkörpern.

(57) Die Erfindung betrifft ein Verfahren zum Spritzgießen von Mehrkomponenten-Kunststoffkörpern und eine Vorrichtung zur Durchführung dieses Verfahrens, wobei die für jeweils einen Spritzzyklus erforderlichen Kunststoffschmelzen in je einer Plastifiziereinheit (17, 18, 19) für jede Kunststoffschmelze erzeugt und von diesen in vorgegebenen Mengen nacheinander in scheibenartiger Anordnung senkrecht zur Längsachse einer einzelnen ausgewählten Spritzeinheit (5) - unabhängig davon, ob jede Plastifiziereinheit (17, 18, 19) mit einer eigenen Spritzeinheit bestückt ist oder nicht - in einen im Ausgangsbereich dieser ausgewählten Spritzeinheit (5) angeordneten Sammelraum (10) eingespritzt werden, bevor die so bereit gestellte Gesamtheit der geschichteten Kunststoffschmelzen mittels eines einzigen Hubes der ausgewählten Spritzeinheit (5) über einen oder mehrere Angußkanal/-kanäle (3) oder ein Angußkanalsystem in das Formwerkzeug (1) eingespritzt wird.

FIG. 1

EP 0 419 911 A2

Xerox Copy Centre

Die Erfindung betrifft ein Verfahren zum Spritzgießen von Mehrkomponenten-Kunststoffkörpern gemäß den Merkmalen des Oberbegriffs des Patentanspruchs 1 sowie eine Vorrichtung zur Durchführung dieses Verfahrens gemäß den Merkmalen des Oberbegriffes des Patentanspruchs 4.

Das Spritzgießen von Mehrkomponenten-Kunststoffkörpern ist seit langem bekannt. Der Ursprung dieser Technologie lag in dem Bestreben begründet, Kunststoffkörper weitgehend aus einem preiswerten und dabei meistens unansehnlichen Kunststoffmaterial herzustellen und dieses im gleichen Arbeitsgang lediglich mit einer möglichst dünnen Oberfläche aus einem ansehnlicheren und dabei meistens teureren Kunststoffmaterial zu beschichten. Zu diesem Zweck wurde beispielsweise in der DE-OS 21 03 885 zunächst ein Verfahren und eine Vorrichtung zur Durchführung dieses Verfahrens offenbart, mit dem aus zwei kombinierten Spritz- und Plastifiziereinheiten und entsprechend geeignet angeordneten Zuleitungen nacheinander bzw. abwechselnd eine als Deckschicht und eine als Kernschicht dienende Kunststoffschmelze über denselben Angußkanal in ein Formwerkzeug gespritzt werden konnten, wobei zunächst eine ausreichende Menge der als Deckschicht vorgesehenen Kunststoffschmelze in das Formwerkzeug und den Angußkanal einzubringen war, bevor in diesen Vorrat eine solche Menge der als Kernschicht vorgesehenen Kunststoffschmelze eingespritzt werden konnte, daß die Deckschicht gleichmäßig über die Innenfläche des Formwerkzeugs verteilt und das Formwerkzeug insgesamt mit Kunststoffschmelze ausgefüllt wurde. Gegebenenfalls konnte zum Schluß noch einmal eine geringe Menge der als Deckschicht vorgesehenen Kunststoffschmelze in das Formwerkzeug eingespritzt werden, um eine Versiegelung der Oberfläche des erzeugten Kunststoffkörpers zu erreichen.

Eine weitere Möglichkeit, Mehrkomponenten-Kunststoffkörper mittels Spritzgießen herzustellen, ist aus der DE-PS 22 59 818 bekannt, nach deren Lehre zwei kombinierte Spritz- und Plastifiziereinheiten je einen Kanal einer Koaxialdüse mit einem zentralen Kanal mit kreisförmigem Querschnitt und einem diesen umgebenden Kanal mit ringförmigem Querschnitt mit je einer Kunststoffschmelze beaufschlagen, wobei die Kanäle durch axiales Verschieben einzelner Düsenteile unabhängig voneinander geöffnet und geschlossen werden können und der Spritzdruck der kombinierten Spritz- und Plastifiziereinheiten ebenfalls unabhängig voneinander einstellbar bzw. regulierbar ist. Die Düse wird dann zunindest während eines Spritzgießzyklus mit ihrem Düsenmund mit einem Angußkanal oder dem Eingang eines Angußkanalsystems eines Formwerkzeuges in Kontakt gebracht. Die beiden Kunststoffschmelzen können in diesem Fall entweder nacheinander bzw. abwechselnd oder zeitlich teilweise überlappend oder vollkommen gleichzeitig in das Formwerkzeug eingespritzt werden.

Mit dem Anwachsen der Erfahrungen im Umgang mit den vorgenannten Verfahren und Vorrichtungen erfolgte dann bereits sehr frühzeitig auch eine Ausweitung des möglichen Anwendungsgebiets, und zwar einerseits in Richtung der Verwendung von keineswegs immer sehr preiswerten Kunststoffmaterialien mit speziellen Eigenschafts-Anforderungen als Kernschicht-Material anstelle eines nur preiswerten Kernschicht-Kunststoffmaterials, beispielsweise der Verwendung von Kunststoffmaterialien mit elektromagnetische Abschirmungen verursachenden Zusätzen als Kernschicht-Material für Gehäuse von elektronischen Geräten gemäß einer Publikation in "Kunststoffe" 75 (1985), 145 - 152, und andererseits in Richtung auf die Verwendung von mehr als zwei verschiedenen Kunststoffschmelzen in einem einzelnen Spritzgießzyklus, um durch Kombination von Kunststoffmaterialien mit sehr speziellen Eigenschaften, beispielsweise säurefest oder undurchlässig für bestimmte Gase oder geschmacksneutral oder nicht fettlöslich, Kunststoffkörper mit ganz bestimm ten Eigenschaftskombinationen, z.B. bestimmte Lebensmittelverpakkungen, erzeugen zu können.

Der letztgenannte Weg führte bereits mit der DE-PS 22 47 995 zu einer Spritzgießvorrichtung mit einer der vorbeschriebenen Koaxialdüse mit zwei Kanälen in Aufbau und Wirkungsweise sehr ähnlichen Dreifach-Koaxialdüse, die im speziellen Fall zwar in ihrem Zentralkanal und in ihrem äußeren Ringkanal dieselbe Kunststoffschmelze, nämlich die für eine Deckschicht bestimmte, weiterleiten soll, während in dem zwischen diesen beiden Kanälen liegenden weiteren Ringkanal eine andere, für eine Kernschicht bestimmte Kunststoffschmelze transportiert wird, doch steht hier der Verwendung von tatsächlich drei unterschiedlichen Kunststoffmaterialien nichts entgegen. Aus der WO 88/00117 ist dann sogar eine Spritzgießvorrichtung mit einer Koaxialdüse zur Zusammenführung und geschichteten Weiterleitung von mindestens fünf verschiedenen Kunststoffschmelzen bekannt.

Alle vorgenannten Verfahren zum Spritzgießen von Kunststoffkörpern bzw. die zu ihrer Durchführung erforderlichen Vorrichtungen benötigen zumindest zwei kombinierte Spritz- und Plastifiziereinheiten, von denen wegen der Notwendigkeit, daß jede auf einen gemeinsamen Angußkanal bzw. einen gemeinsamen Eingang eines Angußkanalsystems bzw. auf eine gemeinsame Düse vor dem vorgenannten Angußkanal bzw. Angußkanalsystem ausgerichtet sein muß, allenfalls nur eine von ihnen in der Symmetrieachse der Werkzeug-Schließeinheit angeordnet sein kann. Das bedeutet aber, daß bei den hohen Drücken während des Einspritzens der Kunststoffschmelzen in das Formwerkzeug erhebliche Kräfte an der jeweiligen Spritzgießvorrichtung angreifen, deren Wirkungslinien nicht mit der Symmetrieachse der WerkzeugSchließeinrichtung übereinstimmen und deren Kompensation einen erheblichen zusätzlichen konstruktiven Aufwand bei der Herstellung einer vorgenannten Spritzgießvorrichtung erfordert. Dies gilt auch dann, wenn die kombinierten Spritz- und Plastifiziereinheiten weitgehend symmetrisch zur Symmetrieachse der Werkzeug-Schließeinheit angeordnet werden, da die gesamte Vorrichtung dann immer noch unter der Voraussetzung zu kon struieren ist, daß die Spritz- und Plastifiziereinheiten nicht in jedem Fall genau gleichzeitig mit gleichen Drücken beaufschlagt werden. Bei den bisher bekannten Spritzgießvorrichtungen zur Herstellung von Mehrkomponenten-Kunststoffkörpern ist dieser zusätzliche und kostentreibende Aufwand jedoch unvermeidlich.

Ebenfalls unvermeidlich und noch viel weitergehend ist bei den bisher bekannten Spritzgießvorrichtungen zur Herstellung von Mehrkomponenten-Kunststoffkörpern der notwendige konstruktive und apparative Aufwand zur Steuerung der Arbeitsphasen der kombinierten Spritz- und Plastifiziereinheiten, um die erforderlichen Druckverläufe der einzelnen kombinierten Spritz- und Plastifiziereinheiten so vorgeben zu können, daß die Endprodukte keine Umschaltmarken auf der Oberfläche oder sonstige Beeinträchtigungen der Gestalt oder Oberfläche durch unterschiedliche Einschalt- oder Abschaltvorgänge von einzelnen Kunststoffschmelzen aufweisen. Dies gilt bereits für eine Spritzgießvorrichtung gemäß der DE-OS 21 03 885, bei der nur zwei Steuer-und Regeleinheiten aufeinander abzustimmen sind, noch viel mehr aber dann, wenn die entsprechenden Spritz- und Plastifiziereinheiten zunächst auf eine ebenfalls separat zu steuernde Mehrkanaldüse mit zu öffnenden und zu schließenden Kanalausgängen arbeiten und dies ggf. auch noch für mehr als zwei Kanäle.

Darüber hinaus erfordert im übrigen auch die inzwischen übliche Verwendung von koaxialen Mehrkanaldüsen zum Spritzgießen von Mehrkomponenten-Kunststoffkörpern selbst einen erheblichen konstruktiven und damit finanziellen Aufwand.

Die vorstehend dargestellten Nachteile wurden zwangsläufig bei einem Verfahren zum Spritzgießen eines Mehrkomponenten-Kunststoffkörpers vermieden, das bereits in der "Kunststoff-Praxis, Beilage zur Zeitschrift Kunststoffe", Heft 7, Juli 1957, S. 389 - 393 beschrieben wurde und darauf abzielte, unter Verwendung einer bekannten hydraulischen Spritzgußmaschine und einer zur Messung des Fließvermögens thermoplastischer Kunststoffe in Abhängigkeit von Spritztemperatur, Formentemperatur und Spritz druck dienenden spiralförmigen Testform in einem Nebenversuch das Fließverhalten eines thermoplastischen Kunststoffes innerhalb der Testform nachzuweisen, indem in einem Spritzgußzylinder mehrere Schichten gleichen Materials, jedoch mit unterschiedlichen Einfärbungen in Richtung der Zylinderachse nebeneinander angeordnet wurden, bevor sie mit einem einzigen Hub des Kolbens des Spritzgußzylinders in die Testform gedrückt wurden. Hier handelte es sich allerdings nur um einen kleinen Spritzgußzylinder mit einer Kapazität von 40 g aufzunehmendem Kunststoff, bei dem gemäß den übrigen Ausführungen der vorgenannten Druckschrift offensichtlich die verschieden eingefärbten Komponenten desselben Kunststoffs zunächst in fester Form in den Spritzgußzylinder eingebracht und dann mittels einer externen Heizvorrichtung aufgeschmolzen wurden, wobei durchaus zu erwarten war, daß an den Grenzen der einzelnen Farbschichten keine wesentlichen Mischungseffekte auftreten würden. Dem Fachmann wurde hier jedoch kein Hinweis darauf gegeben, wie mehrere unterschiedliche und bereits aufgeschmolzene Kunststoffschmelzen in einem Sammelraum im einer Spritzgießform zugewandten Ende eines Spritzzylinders oder einer Extrudereinheit schichtweise deponiert werden können, um dann - und zwar auch in größeren Mengen - ohne merkliche Vermischung mit einem Hub der Spritzeinheit in die Spritzgießform gedrückt zu werden, wobei dies auch noch in einem weitgehend automatisierten Produktionszyklus zu geschehen hat.

Der vorliegenden Erfindung liegt daher die Aufgabe zugrunde, ein Verfahren zum Spritzgießen von Mehrkomponenten-Kunststoffkörpern und eine Vorrichtung zur Durchführung dieses Verfahrens zur Verfügung zu stellen, die den einfachen konstruktiven und damit preiswerten Aufwand der vorbeschriebenen Versuchsanordnung für die Produktion von beliebigen Mehrkomponenten-Kunststoffkörpern nutzbar machen und damit einen wesentlich einfacheren und somit betriebssichereren Ablauf der notwendigen Spritzgießzyklen gestatten.

Die Erfindung löst diese Aufgabe mit Hilfe der Merkmale des kennzeichnenden Teils des Patentanspruchs 1 und der Merkmale des kennzeichnenden Teils des Patentanspruchs 5.

Dabei ergibt sich zunächst der überraschende Effekt, daß es bei geeigneter Auswahl und Schichtung der verwendeten Kunststoffe tatsächlich möglich ist, Schmelzen durchaus unterschiedlicher Kunststoffe ohne merkliche Mischungseffekte an den Schichtgrenzen in einer scheibenartigen Anordnung in einem Sammelraum zusammenzuführen, um sie dann nacheinander so in eine Spritzgießform zu drücken, daß sie dort einen Formkörper aufbauen, der eine im Querschnitt sandwichartige Struktur mit deutlich voneinander abgegrenzten Schichten aufweist.

Außerdem erweist es sich als besonders vorteilhaft, daß einerseits in jedem Fall auf eine komplizierte und teure Mehrkanaldüse verzichtet werden kann und andererseits nur eine einzige Steuer- und Regeleinrichtung für die Durchführung der Druckübertragung von der Spritzeinheit auf den Werkzeuginnenraum erforderlich ist. Das Öffnen und Schließen der Verbindungen zwischen den Plastifiziereinheiten kann in vorteilhafter Weise mittels einfacher gesteuerter Schieber bekannter Art erfolgen, wobei die Steuerung dieser Vorgänge nicht unmittelbar auf den eigentlichen Einspritzvorgang einwirkt und beispielsweise in einfacher Abhängigkeit von der Kolbenstellung der Spritzeinheit beim Zurückfahren in die Ausgangsstellung für einen Einspritzvorgang durchführbar ist. Die Plastifiziereinheiten benötigen - ggf. bis auf eine direkt mit der einzigen ausgewählten Spritzeinheit kombinierte - keine eigenen mit ihnen kombinierten Spritzeinheiten und können daher ebenfalls einfacher konstruiert und damit preiswerter hergestellt werden, was ebenfalls in Bezug auf die Lösung der gestellten Aufgabe von Vorteil ist.

Als vorteilhaft ist auch anzusehen, daß die einzige ausgewählte Spritzeinheit direkt in der Symmetrieachse der Werkzeug-Schließeinheit angeordnet werden kann, da dadurch die Kompensa tion unerwünschter Kräfte an der gesamten Spritzgießvorrichtung vermieden wird.

Besonders vorteilhaft ist außerdem die Möglichkeit, den Ausgangsbereich der Spritzeinheit einschließlich der Anschlüsse für die Zuleitungen von den Plastifiziereinheiten auswechseln zu können, da auf diese Weise das Umrüsten einer Spritzgießvorrichtung auf die Produktion unterschiedlicher Mehrkomponenten-Kunststoffkörper wesentlich erleichtert wird.

Einen weiteren Vorteil bietet eine Ausführungsform der Erfindung, bei der im Sammelraum mechanische Trennhilfen in Form von an der Innenwand des Sammelraums geführten, ansonsten schwimmend gelagerten und mit geeigneten Einfüllnuten und Durchlaßöffnungen versehenen Trennscheiben angeordnet sind, da auf diese Weise auch Kunststoffschmelzen nebeneinander in scheibenartiger Anordnung deponiert und verarbeitet werden können, die ansonsten vorzeitig an ihrer Grenzfläche miteinander in Wechselwirkung treten würden.

Weitere vorteilhafte Ausgestaltungen des erfindungsgemäßen Verfahrens bzw. der zu seiner Durchführung erforderlichen Vorrichtung werden durch die Merkmale der Unteransprüche 3 sowie 6 bis 8 beschrieben.

Ausführungsbeispiele der erfindunsgemäßen Vorrichtung sind in der Zeichnung dargestellt.

Es zeigen:

Fig. 1: Schnitt durch die schematische Darstellung einer erfindungsgemäßen Spritzgießvorrichtung mit mehreren Plastifiziereinheiten und einer einzigen Spritzeinheit.

Fig. 2: Schnitt durch die schematische Darstellung eines weiteren Ausführungsbeispiels der erfindungsgemäßen Spritzgießvorrichtung.

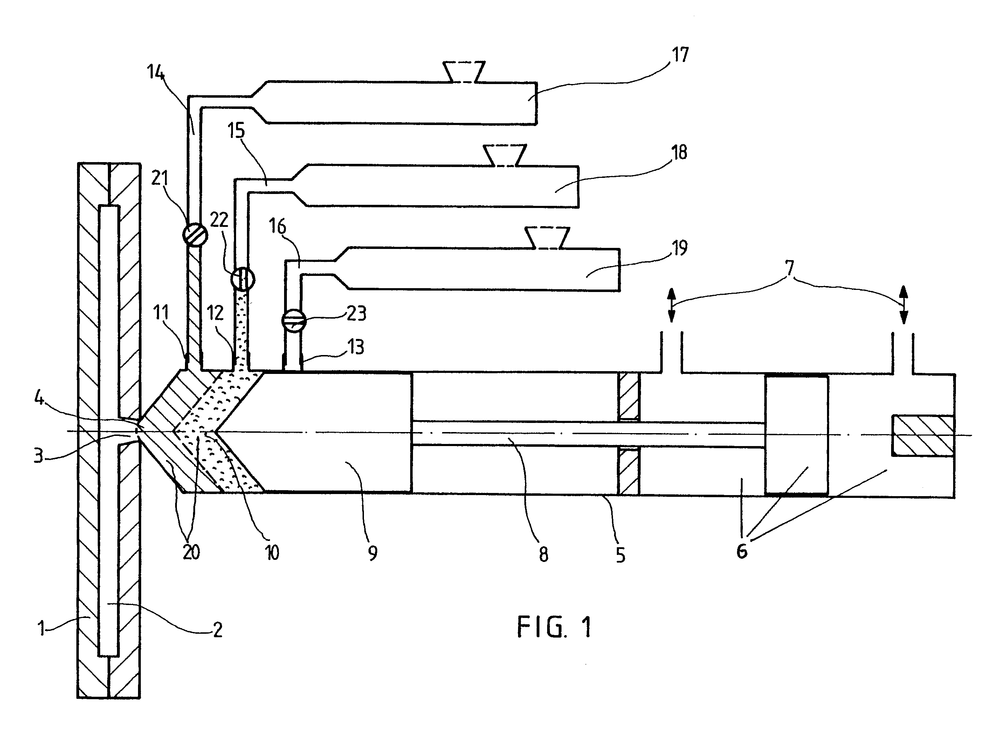

Fig. 1 zeigt ein zweiteiliges Formwerkzeug 1 mit einem Formhohlraum 2 für einen zu produzierenden Mehrkomponenten-Kunststoffkörper und einen Angußkanal 3, an den der düsenartige Ausgang 4 einer Spritzeinheit 5 angekoppelt ist, wobei der Ausgang 4 mit einem bekannten und deshalb hier nicht explizit dargestellten Verschlußmechanismus versehen sein kann. Die Spritzeinheit 5 enthält zunächst eine Kolben-/Zylinder-Anordnung 6 bekannter Bauart, die beispielsweise beidseitig mit einer Hydraulikflüssigkeit beaufschlagt werden kann, was durch die symbolischen Doppelpfeile 7 angezeigt wird. Die Kolbenstange 8 der Kolben-/Zylinder-Anordnung 6 verschiebt einen Stempel 9 in einem Sammelraum 10, der im Ausgangsbereich der Spritzeinheit 5 in Bezug auf das Formwerkzeug 1 angeordnet ist.

Der Sammelraum 10 weist neben dem düsenartigen Ausgang 4 Anschlüsse 11, 12, 13 für die Zuleitungen 14, 15, 16 von Plastifiziereinheiten 17, 18, 19 bekannter Art mit oder ohne eigene integrierte Spritzeinheit auf, in denen verschiedene Kunststoffschmelzen erzeugt werden, die beim Zurückfahren des Stempels 9 aus der - linken - Endstellung eines Einspritzvorganges in die - rechte - Ausgangsstellung eines neuen Einspritzvorganges nacheinander über die Zuleitungen 14, 15, 16 in einer scheibenartigen Anordnung 20 senkrecht zur Längsachse der Spritzeinheit 5 in den Sammelraum 10 eingespeist werden, wobei in den Zuleitungen 14, 15, 16 jeweils steuerbare Schieber 21, 22, 23 bekannter Art rechtzeitig geöffnet und geschlossen werden. Nach dem vollständigen Aufbau einer scheibenartigen Anordnung 20 aus geschichteten Kunststoffschmelzen wird der Stempel 9 von der Kolben-/Zylinder-Anordnung 6 wieder in Richtung auf das Formwerkzeug 1 verschoben, wobei die Kunststoffschmelzen unter, Berücksichtigung der Tatsache, daß die zuerst in das Formwerkzeug 1 eindringende Kunststoffschmelze auch zuerst an den "kalten" Wänden des Formwerkzeugs 1 abkühlt, die Fließgeschwindigkeit vermindert und dann erstarrt und daß die später nachkommenden Kunststoffschmelzen jeweils mit höherer Temperatur und Fließgeschwindigkeit vorwiegend in der Mitte des Angußkanals 3 und des Formwerkzeugs 1 nachdrängen, im Formwerkzeug 1 den gewünschten Mehrkomponenten-Kunststoffkörper mit einer vorgegebenen Schichtstruktur und Oberflächenbeschaffenheit aufbauen.

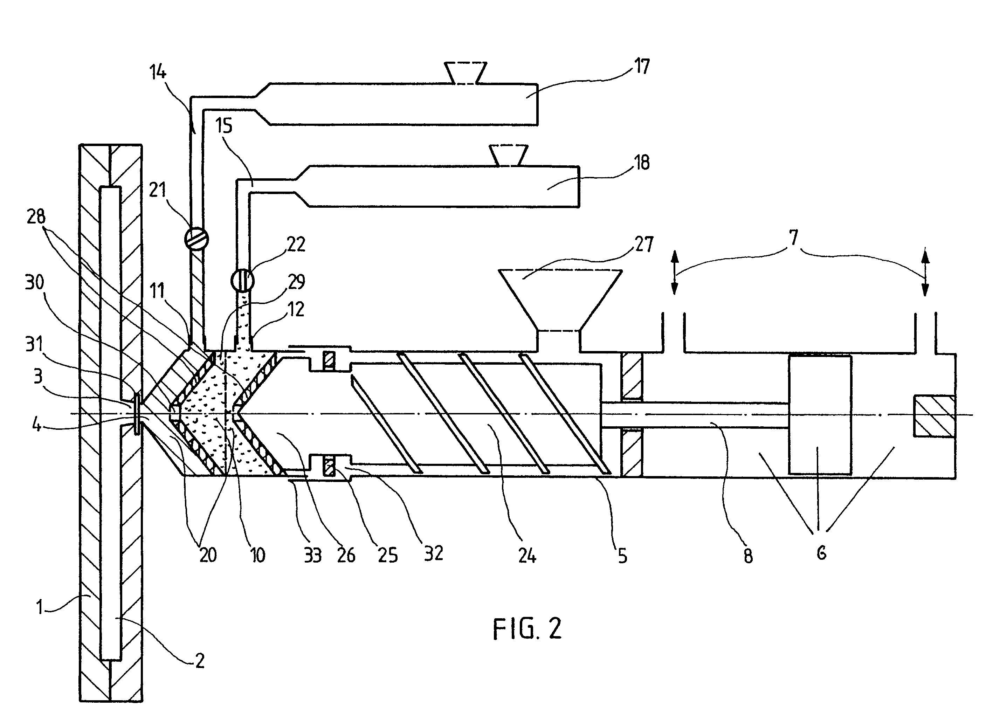

Fig. 2 zeigt im Unterschied zu Fig. 1 insbesondere eine Spritzgießeinheit 5, in der der Stempel 9 durch eine Extruderschnecke 24 mit einer Rückstromsperre 25 und einer Spitze 26 ersetzt ist. Die Versorgung der Extruderschnecke 24 mit Rohmaterial erfolgt über den Vorratsbehälter 27. Der Aufbau der scheibenartigen Anordnung 20 verschiedener Kunststoffschmelzen senkrecht zur Längsachse der Spritzeinheit 5 erfolgt hier mit Hilfe von oder ohne Trennscheiben 28 mit Einfüllnuten 29 und Durchlaßöffnungen 30, wobei beim Zurückfahren der Extruderschnecke aus der - linken - Endstellung eines Einspritzvorganges in die - rechte - Ausgangsstellung eines weiteren Einspritzvorganges zunächst ein bekannter und daher hier nur angedeuteter Verschlußmechanismus 31 in die Schließstellung gebracht wird, bevor durch Öffnen des steuerbaren Schiebers 21 das Einspeisen einer ersten Kunststoffschmelze in den Sammelraum 10 beginnt, durch das zunächst alle Trennscheiben 28 auf die Spitze 26 der Extruderschnecke 24 gedrückt werden. Erreicht danach die Einfüllnut 29 der ersten - linken - Trennscheibe 28 den Anschluß 12 für eine zweite Kunststoffschmelze, wird der Schieber 21 geschlossen und der Schieber 22 geöffnet, so daß nun die zweite Kunststoffschmelze durch die Einfüllnut 29 zwishen die beiden Trennscheiben 28 eindringt und die erste Trennscheibe 28 an ihrem erreichten Ort fixiert, während die zweite Trennscheibe 28 weiterhin auf der Spitze 26 der Extruderschnecke 24 festgedrückt wird. Nach fortgesetztem Zurückfahren der Extruderschnecke 24 in die Ausgangsstellung für einen weiteren Einspritzvorgang gelangt die Rückstromsperre 25 dann in einen Bereich, in dem ihre Wirkung durch bekannte konstruktive Maßnahmen, beispielsweise durch eine begrenzte Erweiterung 32 des Extrudergehäuses, trotz der Bewegung in die Ausgangsstellung aufgehoben wird. Zu diesem Zeitpunkt wird der Schieber 22 geschlossen und es strömt nunmehr Kunststoffschmelze aus dem Bereich der Extruderschnecke 24 durch die Einfüllnut 29 der letzten Trennscheibe 28, die dadurch an ihrem erreichten Ort fixiert wird, und der Spitze 26 der Extruderschnecke bis zum Erreichen der Ausgangsstellung der Extruderschnecke 24 für einen weiteren Einspritzvorgang durch die Extruderschnecke 24. Der neue Einspritzvorgang entspricht im Ablauf demjenigen, der in der Beschreibung zur Fig. 1 bereits dargestellt wurde, kann hier allerdings noch durch die jeweilige spezielle Gestaltung der Durchlaßöffnungen 30 der Trennscheiben 28 beeinflußt werden.

Zusätzlich zeigt die Fig. 2 in schematischer Darstellung noch die Möglichkeit des Auswechselns des Ausgangsbereiches einer Spritzeinheit 5 einschließlich des Sammelraumes 10 und der Anschlüsse 11 und 12 auf, indem nach dem Abkoppeln des düsenartigen Ausgangs 4 vom Angußkanal 3 und der Zuleitung 14 und 15 von den Anschlüssen 11 und 12 lediglich eine paßförmige Rohrverbindung 33 bekannter Art gelöst bzw. nach dem Auswechseln wieder arretiert werden muß. Im dargestellten Fall wurde die paßförmige Rohrverbindung 33 so ausgestaltet, daß gleichzeitig die begrenzte Erweiterung 32 des Extrudergehäuses in sie integriert ist, die der Beeinflussung der Wirkung der Rückstromsperre 25 dient. Diese Beeinflussung kann allerdings auch durch andere geeignete Maßnahmen bewirkt werden.

Bezugszeichenliste

1 Formwerkzeug
2 Formhohlraum
3 Angußkanal
4 düsenartiger Ausgang
5 Spritzeinheit
6 Kolben-/Zylinder-Anordnung
7 symbolische Doppelpfeile für die Beaufschlagung mit Hydraulikflüssigkeit
8 Kolbenstange
9 Stempel
10 Sammelraum
11 - 13 Anschlüsse
14 - 16 Zuleitungen
17 - 19 Plastifiziereinheiten
20 scheibenartige Anordnung
21 - 23 steuerbare Schieber
24 Extruderschnecke
25 Rückstromsperre
26 Spitze der Extruderschnecke
27 Vorratsbehälter
28 Trennscheiben
29 Einfüllnuten
30 Durchlaßöffnungen
31 Verschlußmechanismus
32 Erweiterung des Extrudergehäuses
33 paßförmige Rohrverbindung

**Ansprüche**

1. Verfahren zum Spritzgießen von Mehrkomponenten-Kunststoffkörpern, bei dem mehrere für jeweils einen Spritzgießzyklus separat erzeugte Kunststoffschmelzen vor mindestens einem Angußkanal oder der Eingangsöffnung eines Angußkanalsystems eines Formwerkzeugs zunächst in einem im Ausgangsbereich einer geeigneten Spritzeinheit angeordneten Sammelraum in scheibenartiger Anordnung senkrecht zur Längsachse der Spritzeinheit deponiert werden, bevor sie nach dem Aufbau der vollständigen Füllmenge für das Formwerkzeug im Sammelraum insgesamt mit einem einzigen Hub der Spritzeinheit durch den Angußkanal oder die Eingangsöffnung des Angußkanalsystems in das Formwerkzeug eingespritzt werden,
dadurch gekennzeichnet,
daß die scheibenartige Anordnung (20) der Kunststoffschmelzen im Sammelraum (10) durch geeignete Auswahl und Schichtung der verwendeten Kunststoffe erzeugt wird, die im bereits aufgeschmolzenen Zustand in den Sammelraum (10) eingelassen werden.

2. Verfahren zum Spritzgießen von Mehrkomponenten-Kunststoffkörpern nach Anspruch 1,
dadurch gekennzeichnet,
daß bei der Erzeugung der scheibenartigen Anordnung (20) der Kunststoffschmelzen im Sammelraum (10) geeignete mechanische Trennhilfen (28) verwendet werden.

3. Verfahren zum Spritzgießen von Mehrkomponenten-Kunststoffkörpern nach Anspruch 1 oder 2,
dadurch gekennzeichnet,
daß die Spritzeinheit (5) so mit einer Plastifiziereinheit (17, 18, 19) kombiniert ist, daß diese Kombination auch die in der dem düsenartigen Ausgang (4) des Sammelraums (10) am entferntesten angeordneten Schicht zu deponierende - letzte - Kunststoffschmelze erzeugt.

4. Vorrichtung zur Durchführung des Verfahrens nach einem der vorangegangenen Ansprüche 1 bis 3 mit je einer Plastifiziereinheit für jede erforderliche Kunststoffschmelze und einer oder mehreren mit diesen Plastifiziereinheiten verbundenen Spritzeinheit(en), die während jedes Spritzgießzyklus mit der Eingangsöffnung mindestens eines Angußkanals oder eines Angußkanalsystems gekoppelt ist/sind und durch diese Eingangsöffnung die Kunststoffschmelzen nacheinander, zeitlich teilweise überlappend oder gleichzeitig über den Angußkanal oder das Angußkanalsystem in das Formwerkzeug einspritzt/einspritzen,
dadurch gekennzeichnet,
daß die Plastifiziereinheiten (17, 18, 19) - unabhängig davon, ob sie jeweils mit einer eigenen Spritzeinheit kombiniert sind oder nicht - auf jeden Fall mit einem im Ausgangsbereich einer einzelnen ausgewählten Spritzeinheit (5) angeordneten Sammelraum (10) verbunden sind.

5. Vorrichtung nach Anspruch 4,
dadurch gekennzeichnet,
daß die ausgewählte Spritzeinheit (5) in der Sym-metrieachse der Werkzeug-Schließeinheit angeord-net ist.

6. Vorrichtung nach Anspruch 4 oder 5,
dadurch gekennzeichnet,

daß die ausgewählte Spritzeinheit (5) im wesentlichen eine Kolben-/Zylinder-Anordnung (6) ist, deren bewegliche Teile (6, 8, 9, 24, 28) nur Axialbewegungen in ihrer Längsachse ausführen.

7. Vorrichtung nach Anspruch 4 oder 5,
dadurch gekennzeichnet,
daß die ausgewählte Spritzeinheit (5) eine Kombination aus einer Kolben-/Zylinder-Anordnung (6) und einer Plastifiziereinheit (24, 25, 26) ist, in der die zuletzt in ihren Sammelraum (10) einzuspeisende und von ihrem düsenartigen Ausgang (4) am entferntesten angeordnete Kunststoffschmelze-Schicht unmittelbar erzeugt und aufgebaut wird.

8. Vorrichtung nach Anspruch 7,
dadurch gekennzeichnet,
daß die Plastifiziereinheit (24, 25, 26) ein Schnek-kenextruder (24, 26) mit Rückströmsperre (25) ist, wobei die Extruderschnecke (24) gleichzeitig den axial verschiebbaren Kolben (9) der Kolben-/Zylinder-Anordnung (6) der Spritzeinheit (5) bildet.

9. Vorrichtung nach einem der vorangegangenen Ansprüche 4 bis 8, dadurch gekennzeichnet,
daß die nicht in eine ausgewählte Spritzeinheit (5) integrierten Plastifiziereinheiten (17, 18, 19) als bewegliche Elemente nur um die Längsachse jeder Plastifiziereinheit (17, 18, 19) rotierende Teile aufweisen.

10. Vorrichtung nach Anspruch 9,
dadurch gekennzeichnet,
daß die nicht in eine ausgewählte Spritzeinheit (5) integrierten Plastifiziereinheiten (17, 18, 19) Schneckenextruder bekannter Art ohne Vorrichtung zur axialen Verschiebung der Extruderschnecke im Extrudergehäuse darstellen.

11. Vorrichtung nach einem der vorangegangenen Ansprüche 4 bis 10, dadurch gekennzeichnet,
daß im Sammelraum (10) der ausgewählten Spritzeinheit (5) mechanische Trennhilfen (28) zum Aufbau einer scheibenartigen Anordnung (20) der Kunststoffschmelzen installiert sind.

12. Vorrichtung nach Anspruch 11,
dadurch gekennzeichnet,
daß es sich bei den mechanischen Trennhilfen (28) um von der Innenwand des Sammelraums (10) geführte, schwimmende und mit geeigneten Einfüllnuten (29) und Durchlaßöffnungen (30) versehene Trennscheiben (28) handelt.

13. Vorrichtung nach einem der vorangegangenen Ansprüche 4 bis 12, dadurch gekennzeichnet,
daß die Verbindungen (14, 15, 16) zwischen den nicht in eine ausgewählte Spritzeinheit (5) integrierten Plastifiziereinheiten (17, 18, 19) und dem Sammelraum (10) Mittel (21, 22, 23) zum Öffnen und Schließen der Verbindungen (14, 15, 16) aufweisen.

14. Vorrichtung nach Anspruch 13,
dadurch gekennzeichnet,
daß die Mittel (21, 22, 23) zum Öffnen und Schließen der Verbindungen gesteuerte Schieber (21, 22, 23) bekannter Art sind.

15. Vorrichtung nach einem der vorangegangenen Ansprüche 4 bis 14, dadurch gekennzeichnet, daß der den Sammelraum (10) enthaltende Ausgangsbereich der ausgewählten Spritzeinheit (5) einschließlich der zugehörigen Anschlüsse (11, 12, 13) der Zuleitungen (14, 15, 16) der Plastifiziereinheiten (17, 18, 19) auswechselbar gestaltet ist.

FIG. 1

FIG. 2